# EUROPÄISCHE PATENTSCHRIFT

(11) **EP 0 462 420 B1**
(45) Veröffentlichungstag und Bekanntmachung des Hinweises auf die Patenterteilung: **05.10.1994**
(21) Anmeldenummer: 91108452.3
(22) Anmeldetag: 24.05.1991
(51) Int. Cl.: B29D 7/01, B29C 47/88

(54) **Verfahren und Vorrichtung zum Verringern des Durchhangens und/oder des unterschiedlichen Spannungsprofils einer im Blasverfahren hergestellten und flachgelegten Schlauchfolienbahn**
Process and apparatus for reducing the sag and/or the different stress profile of by extrusion blowing produced and flattened tubular film
Procédé et dispositif pour réduire la flexion et/ou le profil de tension d'une feuille tubulaire fabriquée par soufflage et aplatie

(30) Priorität: 06.06.1990 DE 4018150; 31.07.1990 DE 4024326
(43) Veröffentlichungstag der Anmeldung: 27.12.1991
(73) Patentinhaber: Windmöller & Hölscher, D-49525 Lengerich (DE)
(72) Erfinder: Feistkorn, Werner, Dr. Dipl.-Ing., W-4401 Saerbeck (DE); Voss, Klaus-Peter, Dipl.-Ing., W-4540 Lengerich (DE)
(74) Vertreter: Gossel, Hans K., Dipl.-Ing.

(56) Entgegenhaltungen:
- DE-A- 2 146 266
- DE-A- 2 365 843

## Beschreibung

Die Erfindung betrifft ein Verfahren nach dem Oberbegriff des Patentanspruchs 1.

Schlauchfolien werden bei ihrer Herstellung nach dem Aufblasen zu einer Schlauchfolienblase aus dieser durch ein Quetschwalzenpaar abgezogen, denen keilförmig aufeinander zu laufende Flachlegeplatten vorgeschaltet sind, die in Richtung auf den Walzenspalt des Quetschwalzenpaares konvergieren. Eine Folge dieser Art der Flachlegung der aus der Schlauchfolienblase abgezogenen Schlauchfolienbahn ist, daß die seitlichen gefalteten Kantenbereiche der Schlauchfolienbahn unmittelbar in den Walzenspalt des Quetschwalzenpaares hineinlaufen, während die zwischen den gefalteten Kantenbereichen der Bahn liegenden Bahnteile mit unvermeidbarer Reibung über die Innenseiten der Flachlegeplatten gleiten und ausgehend von gegenüberliegenden Mantellinien des Folienschlauches zunehmend in eine flache Form gedrückt werden, in der dann die flach aufeinanderliegenden Wandungsteile der Bahn durch den Spalt der Abzugswalzen laufen. Die Folge dieser Art der Flachlegung der aus der Schlauchfolienblase abgezogenen Schlauchfolienbahn ist, daß deren im flachgelegten Zustand mittleren Bereiche der aufeinanderliegenden Bahnteile in Längsrichtung stärker gestreckt worden sind als die gefalteten Randbereiche, die ohne vorheriges Gleiten auf den Flachlegeplatten unmittelbar in den Walzenspalt des Abzugswalzenpaares eingelaufen sind. Durch diese unterschiedliche Streckung der aufeinanderliegenden Bahnteile der Schlauchfolienbahn weist diese in ihrem mittleren Bereich gegenüber den Randbereichen einen gewissen Durchhang auf, der sichtbar wird, wenn man die flachgelegte Bahn, die in einer horizontalen Ebenen lose abgestützt gehalten wird, beobachtet. Der Durchhang läßt sich auch beobachten, wenn die flachgelegte Schlauchfolienbahn über ihre Breite in Längsstreifen gleicher Breite getrennt und an die einzelnen Längsstreifen gleich große Gewichte gehängt werden. Die Gewichte nehmen dann aufgrund der unterschiedlichen Längung der Bahnbereiche die Form einer Kettenlinie an.

Aufgrund dieser unterschiedlichen Streckung der Schlauchfolienbahn über ihren Querschnitt bei ihrer Herstellung ergeben sich auch unterschiedliche Spannungen in der Bahn quer zu ihrer Längsrichtung.

Würde eine derartige Schlauchfolienbahn beispielsweise längs ihrer Mittellinie durchtrennt werden, würden die beiden Halbschlauchbahnen nach außen hin abgelenkt werden, weil die Spannung außen größer ist als in deren mittleren Bereich, wodurch die Halbschlauchbahnen dann gekrümmte Formen annehmen würden. Derartige Krümmungen von Bahnen sind aber bei der Weiterverarbeitung unerwünscht. Würden derartige Bahnen in Druckmaschinen bedruckt werden, ergäben sich erhebliche Schwierigkeiten, weil das Register und der Passer (Formatlängen) nicht genau eingehalten werden könnten.

Aus der DE-OS 23 65 843 ist ein Verfahren nach dem Oberbegriff des Patentanspruchs 1 bekannt, bei dem zur Herstellung von Schlauchfolien aus Polyäthylenterephtalat durch Biaxialverstreckung im Bereich des Umwandlungspunktes zweiter Ordnung eines extrudierten, amorphen Folienschlauches und anschließende Längsverstreckung bei Temperaturen, die zwischen dem Umwandlungspunkt zweiter Ordnung und dem Schmelztemperaturbereich liegen, die Biaxialverstreckung mit einem Streckverhältnis von 3,3 bis 4,2 in Längsrichtung und 4,0 bis 4,7 in Querrichtung bei einer Schlauchtemperatur von 84 bis 86 °C und die Nachlängsverstreckung ohne Einführung eines Gaspolsters mit einem Streckverhältnis von 1,05 bis 2,5 bei einer Schlauchtemperatur von 148 bis 152 °C vorgenommen wird. Die so hergestellte Folie wird anschließend abgekühlt und gegebenenfalls aufgewickelt.

Aufgabe der vorliegenden Erfindung ist es, ein Verfahren nach dem Oberbegriff des Patentanspruchs 1 zu schaffen, durch das sich der Durchhang und/oder die unterschiedlichen Spannungszustände quer zu der Schlauchfolienbahn auf einfache Weise verringern oder möglichst vollständig beseitigen lassen.

Erfindungsgemäß wird diese Aufgabe durch die Merkmale des Patentanspruchs 1 gelöst.

Nach dem erfindungsgemäßen Verfahren haben das Erwärmen und anschließende Kühlen sowie das Strecken grundsätzlich unterschiedliche Wirkungen, so daß diese beide für sich allein oder aber auch gleichzeitig oder in miteinander kombinierter Form ausgeführt werden können.

Durch die Erwärmung der Bahn, eventuell bis in den Bereich der Kristallisationstemperatur, erfolgt eine Rekristallisation oder Relaxation, die entsprechend den jeweiligen Spannungszuständen quer über die Bahn unterschiedlich groß ausfallen kann. Wird anschließend die in dieser Weise durch Erwärmung relaxierte Schlauchfolienbahn abgekühlt, erfolgt eine Fixierung der durch Relaxation oder Rekristallisation orientierten Moleküle, was zu einer Verringerung des Durchhanges und zu einem Angleichen der unterschiedlichen Spannungszustände führt. Die Kühlung der Bahn führt zu einer Thermofixierung, so daß nach Durchlauf durch die Behandlungsstrecke die Schlauchfolienbahn zumindest einen verringerten Durchhang und über ihren Durchmesser vergleichmäßigte Spannungen aufweist.

Durch Strecken der Bahn erfolgt ausgehend von den Randbereichen eine nach innen hin abnehmende Orientierung der Moleküle über die Breite der Bahn, durch die in erster Linie der unerwünschte Durchhang verringert werden kann.

Sowohl Erwärmung als auch anschließende Thermofixierung durch Kühlung als auch alleiniges Strecken der Bahn führt zur Verringerung des Durchhanges bzw. zum Angleichen der unterschiedlichen Spannungen über die Breite der Bahn. Besonders günstige Ergebnisse können erzielt werden, wenn die Bahn unter Erwärmung gleichzeitig gestreckt und anschließend in der beschriebenen Weise durch Kühlen thermofixiert wird.

Eine Vorrichtung zur Durchführung des erfindungsgemäßen Verfahrens ist Gegenstand des Patentanspruchs 2.

Aus DE-A- 21 46 266 ist eine Vorrichtung zum Verstrecken von Folien mit mehreren Reckwalzen bekannt, von denen ein Teil erwärmt und ein anderer Teil gekühlt wird.

Neben der besonderen Anordnung der Walzen in zwei zueinander parallelen Ebenen ist bei der erfindungsgemäßen Vorrichtung mindestens eine an diese anstellbare Tastrolle vorgesehen. Diese Tastrolle, die vorzugsweise durch Federn ausfahrbar und an die Schlauchfolienbahn anstellbar ist, mißt den Durchhang der Bahn, da die Tastrolle entsprechend des Durchhanges ausfährt und der gemessene Ausfahrwert ein Maß für den Durchhang ist. Der gemessene Durchhang wird dann zur Regelung des erfindungsgemäßen Verfahrens verwendet, und zwar werden Erwärmung und nachfolgende Kühlung und/oder Streckung der Bahn in der Weise aufeinander abgestimmt, daß der Durchhang und/oder die unterschiedlichen Spannungen über die Breite der Bahn minimiert werden.

Ein Ausführungsbeispiel der Erfindung wird nachstehend anhand der Zeichnung erläutert. In dieser zeigt
- Fig.1: vier in zueinander parallelen Ebenen seitlich versetzt angeordnete Walzen, über die die flachgelegte Schlauchfolienbahn zick-zack-förmig läuft und
- Fig.2: eine schematische Darstellung des Regelkreises.

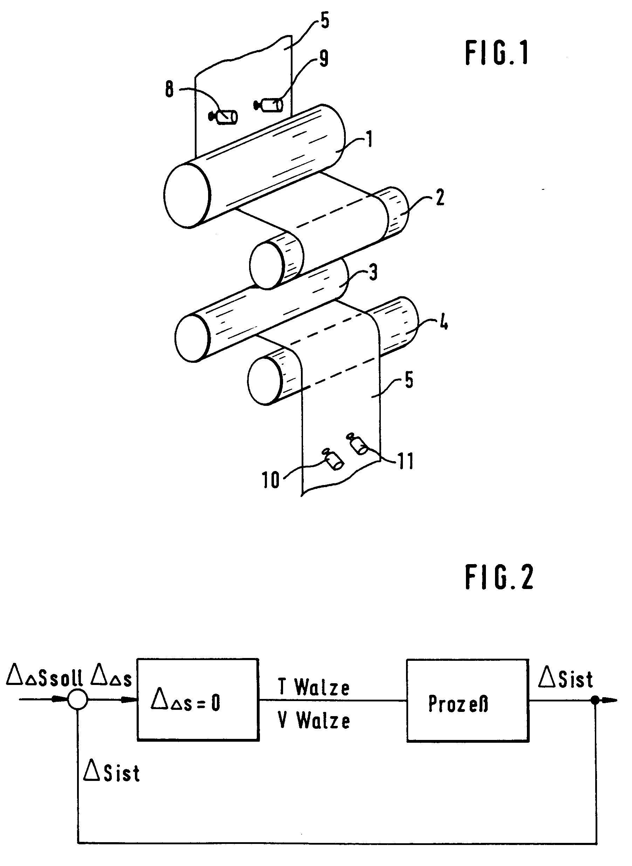

In Fig.1 sind vier in einem nicht dargestellten Gestell in zueinander parallelen Ebenen versetzt zueinander angeordnete Walzen 1,2,3,4 dargestellt, über die die im Folienblasverfahren hergestellte flachliegende Schlauchfolienbahn 5 in der dargestellten Weise zick-zack-förmig läuft. Von den Walzen 1 bis 4 sind die Walzen 1 und 2 in bekannter Weise beheizt, während die Walzen 3 und 4 in bekannter Weise gekühlt sind.

Sämtliche Walzen sind mit Antrieben versehen, wobei zur Streckung der Bahn 5 die Walze 2 mit höherer Geschwindigkeit umläuft als die Walze 1 und die Walze 3 wiederum mit höherer Geschwindigkeit als die Walze 2, während die Walzen 3 und 4 keine Geschwindigkeitsdifferenz aufweisen.

Zur Messung des Durchhanges der Bahn sind an die in die Walzenstrecke einlaufende Bahn 5 Tastrollen 8,9 und an die aus der Walzenstrecke ablaufende Bahn Tastrollen 10,11 angestellt, die den Durchhang als Strecke messen, und zwar ausgehend von einer Null-Ebene, die durch die Seitenkanten der Bahn gezogen ist. Dabei messen die Tastrollen 8,9 den Ist-Wert des Durchhanges, also den Durchhang ausgehend von der Nullebene, während die Tastrollen 10,11 den aufgrund der Regelung erreichten verringerten Durchhang erfassen.

In Fig.2 ist der Regelkreis dargestellt. Die Regelung wird so lange fortgeführt, bis der Wert _{d}s ein Minimum erreicht hat.

Bei den Tastrollen kann es sich um federbelastete Kolben handeln, deren Kolbenstangen an ihren Enden die Tastrollen tragen.

## Patentansprüche

1. Verfahren zum Verringern des Durchhanges und/oder des unterschiedlichen Spannungsprofils einer im Blasverfahren hergestellten und flachgelegten Schlauchfolienbahn aus thermoplastischem Kunststoff quer zu ihrer Längsrichtung, bei dem die Schlauchfolienbahn über ihre Breite erwärmt und anschließend gekühlt und/oder gestreckt wird,
**dadurch gekennzeichnet**,
daß der Durchhang der Schlauchfolienbahn (5) quer zu ihrer Längsrichtung vor und/oder nach deren Durchlauf durch die Behandlungsstrecke gemessen und entsprechend den gemessenen Werten die Erwärmungs- und/oder Kühltemperaturen und/oder das Streckverhältnis erhöht oder erniedrigt werden.

2. Vorrichtung zur Durchführung des Verfahrens nach Anspruch 1 mit dem Erwärmen und dem Kühlen dienenden Reckwalzen,
**dadurch gekennzeichnet**,
daß in zwei zueinander parallelen Ebenen seitlich versetzt mindestens zwei Walzen (1, 3; 2, 4) angeordnet sind, von denen mindestens die erste erwärmbar und die letzte kühlbar ist, daß die Bahn in Form von aufeinanderfolgenden, offenen Schlaufen zick-zack-förmig über die Walzen geführt ist und daß zwischen den seitlichen Rändern der Schlauchfolienbahn (5) vor und/oder nach den von dieser zick-zack-förmig durchlaufenen Walzenstrecke mindestens eine an diese anstellbare Tastrolle (9 bis 11) angeordnet ist.

## Claims

1. A method for reducing the sag and/or the variable stress profile transversely to its longitudinal direction of a laid flat tubular film web of a thermoplastic synthetic material produced by the extrusion blowing method, wherein the tubular film web is heated over its width and is subsequently cooled and/or stretched,
**characterized in that**
the sag of the tubular film web (5) transversely to its longitudinal direction is measured before and/or after it has passed through the processing path, and that the heating and/or cooling temperatures and/or the stretching ratio are increased or reduced in accordance with the measured values.

2. An apparatus for operating the method according to claim 1 with stretch rollers serving for the heating and cooling,
**characterized in that**
at least two rollers (1, 3; 2, 4) are arranged with a lateral offset in two planes that are parallel to each other, whereof at least the first is heatable and the last is coolable; that the web is carried over the rollers in the form of successive open loops in a zigzag configuration; and that between the lateral edges of the tubular film web (5) there is arranged at least one feeler roller (9 to 11) that can be set against said web ahead or behind the roller path passed through by the latter in a zigzag configuration.

## Revendications

1. Procédé pour diminuer l'affaissement et/ou le profil de tension différent d'une feuille tubulaire fabriquée suivant le procédé de soufflage et mise à plat à partir d'une matière thermoplastique transversalement à sa direction longitudinale, dans lequel la feuille tubulaire est chauffée sur toute sa largeur et refroidie et/ou étirée ensuite, caractérisé en ce que l'affaissement de la feuille tubulaire (5) transversalement à sa direction longitudinale est mesurée avant et/ou après son passage à travers le trajet de traitement et que conformément aux valeurs mesurées, les températures d'échauffement et/ou de refroidissement et/ou le rapport d'étirage sont augmentés ou diminués.

2. Dispositif pour la mise en oeuvre du procédé selon la revendication 1 avec des cylindres étireurs servant à l'échauffement et au refroidissement, caractérisé en ce qu'au moins deux rouleaux (1, 3 ; 2,4) sont disposés de façon décalée latéralement l'un à l'autre dans deux plans parallèles et dont au moins le premier peut être chauffé et le dernier peut être refroidi, en ce que la feuille passe sous forme de boucles ouvertes qui se suivent en zig zag sur les rouleaux et en ce qu'il est disposé entre les bords latéraux de la feuille tubulaire (5) avant et/ou après le trajet de rouleaux parcouru par celle-ci en zig zag au moins un rouleau palpeur (9 à 11) applicable à celle-ci.
